# EUROPEAN PATENT SPECIFICATION

(11) **EP 2 228 553 B1**
(45) Date of publication and mention of the grant of the patent: **15.02.2012**
(21) Application number: 09380189.2
(22) Date of filing: 17.12.2009
(51) Int. Cl.: F16C 1/22

(54) **Device for the automatic correction of cable length in power window mechanisms**
Vorrichtung zur automatischen Korrektur der Kabellänge in Fensterhebermechanismen
Dispositif pour la correction automatique de la longueur de câble dans des mécanismes de vitres électriques

(30) Priority: 11.03.2009 ES 200900677
(43) Date of publication of application: 15.09.2010
(73) Proprietor: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio

(56) References cited:
- EP-A1- 0 778 925
- EP-A2- 1 491 780
- EP-A2- 1 669 617
- US-A- 5 653 148
- US-A1- 2006 179 965

## Description

### Description.

The invention relates to a device for the automatic correction of cable length in power window mechanisms.

### Purpose of the Invention.

The purpose of the invention is to bring together in a single device, a retrofitting device, a means of immobilising the device itself when it is not in operating position, and a means of gathering cable as it stretches, because of force to which it is subjected during the operation of the power window mechanism.

The device that is the object of the invention, as it is made up of several parts that fit together with each other, needs a means of immobilisation to avoid the loss of any of them when it is stored, or in the process of being assembled, which is easy to handle, and which specifically does not come apart before being incorporated into the power window mechanism in the appropriate position.

Another of the purposes of the invention is to provide a means to increase the effective length of the cover, so that it compensates for the stretching of the power window cable and that its free length remains constant.

### State of the Art.

There are no known retrofitting devices that bring together the means of immobilisation of the device and of its parts and simultaneously the means for the correction of the length of the cable in the power window; however, there are several devices commonly called "retrofitting" devices that only have the second function, namely that of the correction of the length of the cable.

We find examples of the state of the art in Spanish patents no. 200102077 and 9000795 belonging to the holder of the present invention which disclose adjustable retrofitting devices, and in the European Patent no. 778925, belonging to the Küster & Co. GMBH company, where a device for the automatic correcticn of the length of the flexible elements of controls by cable, particularly a device for the adjusting of the cable is disclosed.

Another example is disclosed in the patent EP1669617 (A2), in the name of DURA AUTOMOTIVE SYSTEMS GMBH (DE), where an adjusting system for Bowden cables in vehicles comprises a spring-loaded separator consisting of inner and outer telescopic sleeve and where the sleeves can be locked in position.

### Description of the Invention.

The device comprises a piston that slides along the inside and along a cylindrical member. the cover of the cable is housed in the piston, whereas the cylindrical member is mounted on the drum cover.

The piston and its lateral surface are surrounded by a ring with a series of chocks, these chocks acting on gear teeth on the inside lateral surface of the cylindrical member, so that the piston may only slide in one direction, outwards from the cylindrical member.

A compression spring is placed on the inside of the cylindrical member with one end resting on its base, and the opposite end pushes the ring outwards, which in turn pushes the piston, and with it, the cover.

The design of the ring helps to make it so that the chocks incorporated offer a great deal of resistance to the movement of the piston inwards, cover in compression, but very little resistance outwards, when the cable is thightened.

The means of immobilisation of the different parts of the device make up a group of harpoons in the lower part of the piston, which are clipped onto the base of the cylindrical member, allowing:
- The pre-assembly and storing of the retrofitting without any of the parts comprising the device coming apart and falling off.
- The activating of the retrofitting in the power window, when the operator turns the harpoons of the anchoring placed in the piston, in the base of the cylindrical member.

The parts or pieces of the device are a piston, a ring that goes around said piston, a spring that is housed inside the cylindrical member, and the cylindrical member itself, which houses in its interior the piston, the ring, and the spring.

The piston is a tubular body, one of the ends of which has a base in the shape of a circular crown, the perimeter of which has a skirt pointing downwards, from which some harpoons stick out, the function of which, as described below, is to immobilise the piston inside of the cylindrical member, preventing the ring, the spring, or the piston itself from getting lost.

In said skirt there are some recesses, whose function is that of serving as housing for the chocks of the ring.

The cylindrical member is a tubular body with a first cylindrical part, which is extended into a second part, also cylindrical, with a smaller diameter, whose lateral surface has some ribs to facilitate the immobilisation of the cylindrical member in the drum cover, and which is extended to a third part that is also cylindrical. The first cylindrical part has some slots in its single base for the anchoring of the harpoons of the piston and the later detachment of the same.

On the inside lateral surface of the cylindrical member there is a vertical arrangement of gear teeth to facilitate the retaining of the chocks of the ring that surrounds the piston, so that it offers a great deal of resistance to the movement of the piston inwards with respect to the cylindrical member.

The ring is a circular crown whose outer perimeter has tilted bent bars, the ends of which are shaped like chocks; they rest on the vertical arrangement of gear teeth of the cylindrical member, offering resistance to the movement of the piston inwards compressing the spring, but very little resistance outwards.

### Description of the drawings.

Figure 1 is a top plan view of the piston (11), in which one can see the crown or base (19), with the skirt (12) from which the harpoons stick out (14).
Figure 2 is a side elevation view of the piston (11).
Figure 3 is a bottom plan view of the piston (11).
Figure 4 is a top plan view of the ring (21).
Figure 5 is a bottom plan view of the ring (21).
Figure 6 is a side elevation view of the ring (21).
Figure 7 is a schematic front elevation view of the spring (25).
Figure 8 is a schematic front elevation view of the cylindrical member (26).
Figure 9 is a bottom plan view of the cylindrical member (26).
Figure 10 is a transverse, partial cross-elevation view of the assembled retrofitting device (10).

Other details and characteristics shall be shown throughout the description below referring to drawings attached to this report which are shown for illustrative but not limiting purposes as practical embodiment of the invention.

### Description of a preferred embodiment of the invention.

The retrofitting device (10) comprises some parts or pieces like a piston (11), which slide along the inside of a cylindrical member (26), said piston being surrounded by a ring (21) with chocks (23) that fit into the arrangement of gear teeth (31) placed on the inside of said cylindrical member (26), with a spring (25) located around the piston, pushing the piston up the cylindrical member (26).

One of the purposes of the invention is the means of ensuring that the different parts of the device (10) : the piston (11), the cylindrical member (26), the ring (21), and the spring (25) are not lost when (10) they are not working in the drum cover of the power window mechanism. The aforementioned means preferably include harpoons arranged in the piston (11) that fit into some slots (33) placed in the base (36) of the cylindrical member (26).

Another aim of the invention is a means of increasing the effective length of a cover, not represented in the figures, to counteract the stretching of a cable not represented in the figures.

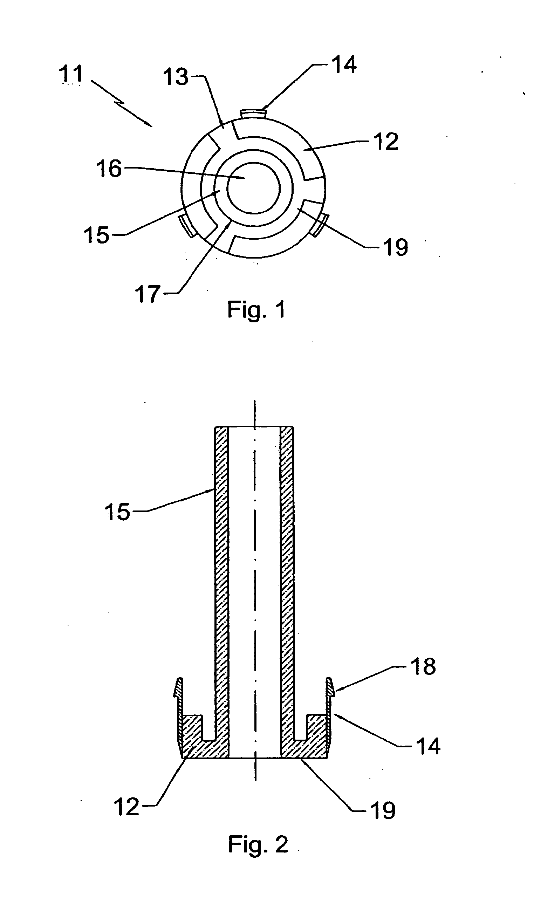

The piston (11), as is shown in figures 1 and 2, has a tubular body (15), one of the ends of which has a circular crown or base (19), which extends downwards like a skirt (12) from the perimeter of which some harpoons come out (14), pointing downwards as well.

In the skirt (12) there are housings 25 (13), see figure 1 for the chocks (23) that come out of the ring (21).

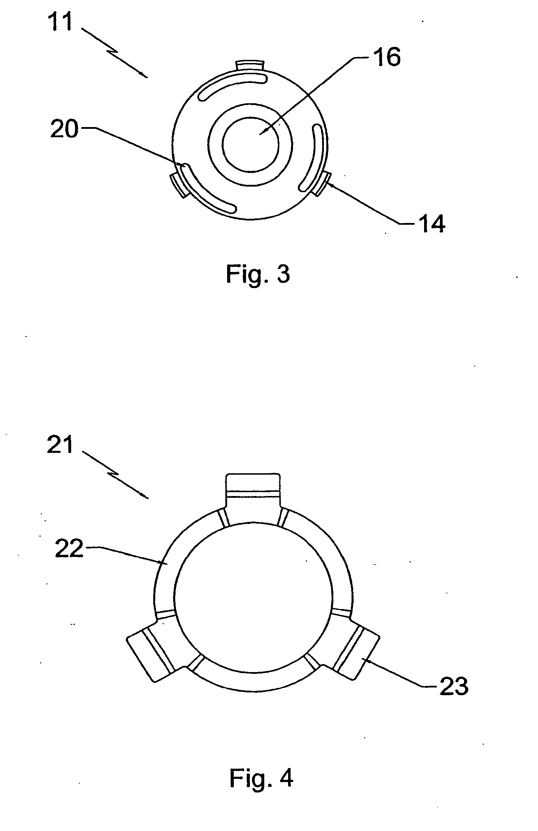

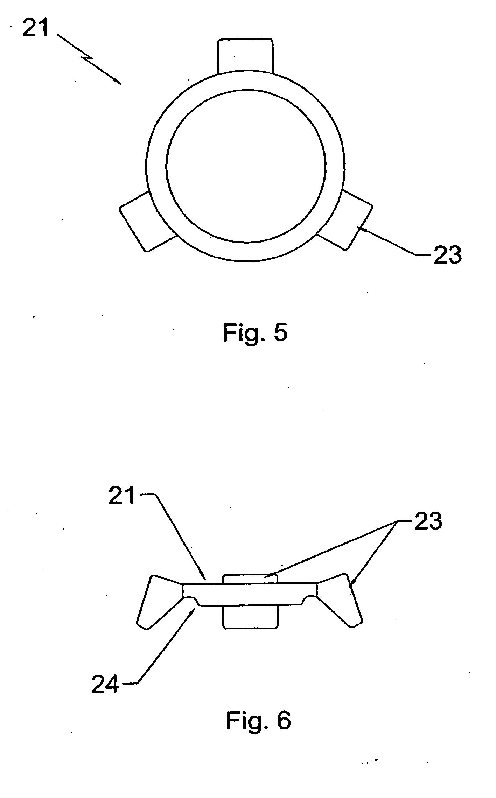

The ring (21), as can be seen in figures 4, 5 and 6, has a radial arrangement, with sightly tilted chocks (23) pointing outwards, so that the ring (21), in the assembly position, surrounds the tubular body (15) of the piston (11), and the chocks (23) are housed in the arrangement of gear teeth (31) placed on the inside of the body of the cylindrical member (26).

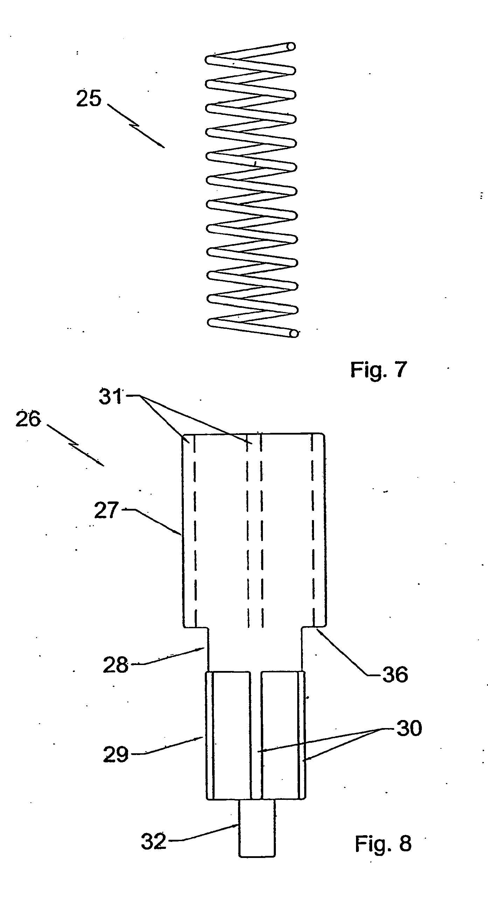

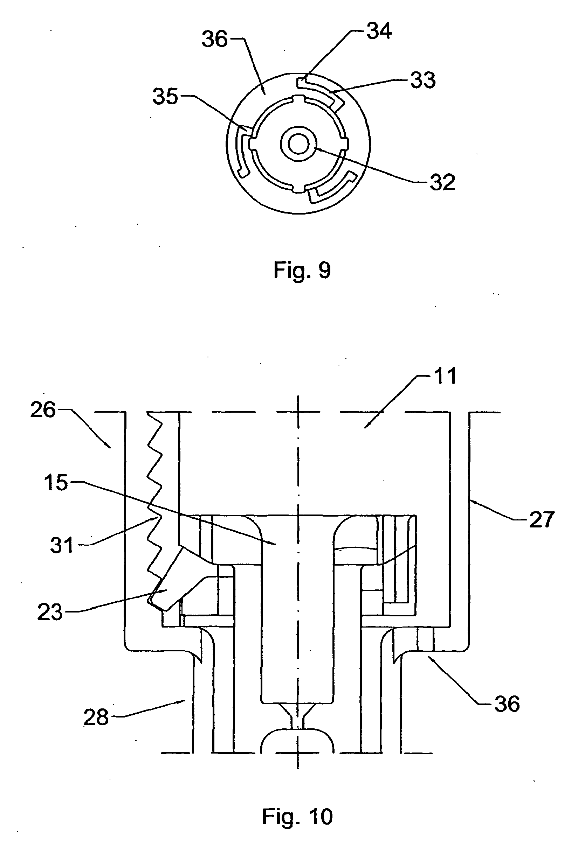

The cylindrical member (26), as is illustrated in figures 8 and 9, has a tubular body with a first cylindrical part (27), which extends downwards into a second cylindrical part with a smaller diameter (28), which in turn extends into a third cylindrical part with a smaller diameter than the second part (32). The tubular body (27) has a lengthwise arrangement (31) of gear teeth on its inside lateral surface, and its base (36) has slots (33), for the fitting in and out of the harpoons at the ends (35-34) of the slots, respectively, see the aforementioned slots (33) in figure 9.

The two cylindrical parts (28) of the cylindrical member (26) have an arrangement of lengthwise ribs (29), which partially cover its entire length, see figure 8.

When the device (10) is stored or being put into the power window mechanism, the harpoons (14) and their ends (18), which come out of the skirt (12), fit into the slots (33) in the base (36), of the cylindrical member (26) and more specifically on the end (35), keeping the piston attached to the cylindrical member (26) holding the spring (25) tightly between the piston (11) and the cylindrical member (26), also pushing this way on the spring (25) and the ring (21).

When the operator mounts the device (10) in the drum cover of the power window mechanism, the piston (11) turns, forcing the harpoons (14) to go through the slot (33), and pass from (14) one end (35) of retention to the other end (34) to free the different parts (10).

This turn makes the chocks (23) slide simultaneously on ramps of gear teeth of the cylindrical member (26), which makes the chocks (23) fold progressively until they enter into the gear teeth (31). With this turn, the system (10) and the cylindrical member (26) are activated.

In figure 10 can be seen how the chocks (23), bearing the force of compression between the piston, are lodged in the arrangement of gear teeth (31), and can jump upwards, through the pressure of the spring (25),

not drawn in this figure, correcting in this way the lengthening or stretching of the cable belonging to the power window mechanism.

The possibility of clipping the piston (11) implies the end of one of the major drawbacks of these devices (10), which is that when they are stored or in the process of being assembled, some of their parts can be lost, basically by incorporating a spring (25).

Having sufficiently described this invention using the figures attached, it is easy to understand that any modification may be made to the detail which may be deemed to be appropriate, whenever these changes do not alter the essence of the invention summarised in the following claims.

## Claims

1. Device for the automatic correction of cable lenght in power window mechanisms of those designed to increase the effective length of a cover, to compensate for the stretching of the cable, keeping its free length constant, **characterised by** the fact that the wherein the device (10) comprises a piston (11), a ring (21) surrounding said piston (11), a compression spring (25) and a cylindrical member (26) which houses in its interior said piston (11), ring (21) and spring (25),
wherein said cylindrical member (26) has a tubular body with a first cylindrical part (27), which extends radially inwards forming a base (36),
wherein said compression spring (25), for tensioning the cable, has one end resting on said base (36), and the opposite end pushes the ring (21) and the piston (11),
wherein said first cylindrical part (27) has a lengthwise arrangement (31) of gear teeth on its inside lateral surface and its base (36) has slots (33),
wherein said ring (21) has an arrangement of chocks (23) placed in a radial position, fitting lengthwise into said gear teeth of the lengthwise arrangement (31) such that said piston (11) can slide in said cylindrical member (26) in only one direction away form the base (36),
wherein said piston (11) has a tubular body (15), one end of which having a circular crown or base (19) which extends towards the other end like a skirt (12), with harpoons (14) coming out of its perimeter also pointing towards the other end, the ends (18) of said harpoons (14) being suitable for anchoring into said slots (33) and for releasing from said slots (33) by simply turning the piston (11) with respect to the cylindrical member (26).

2. Device for the automatic correction of cable lenght in power window mechanisms according to claim 1 **characterised by** the fact that said slots (33) have ends (35-34), for the fitting in and out of the harpoons (14) in said ends (35-34).

3. Device for the automatic correction of cable lenght in power window mechanisms according to claim 1 **characterised by** the fact that when the device (10) is stored or when the device (10) is not placed in the drum cover of the window lifting mechanism, the harpoons (14) and their ends (18), which come out of the skirt (12), fit into the slots (33) in the base (36), of the cylindrical member (26) and more specifically on the slots (35), keeping the piston attached to the cylindrical member (26) holding the spring (25) tightly between the piston (11) and the cylindrical member (26), also pushing this way on the spring (25) and the ring (21).

4. Device for the automatic correction of cable lenght in power window mechanisms according to claim 1 **characterised by** the fact that when the operator places the device (10) in the drum cover of the window lifting mechanism, he or she turns the piston (11) with respect to the embolus (11), obligating the harpoons (14) to go through the slot (33), and pass (14) from one end (35) of retention to the other end (34) to release the different parts of (10); simultaneously, the chocks (23) slide on ramps of gear teeth (31) of the cylindrical member (26) that make these chocks (23) fold progressively until they enter the gear teeth (31).

## Patentansprüche

1. Vorrichtung zur selbsttätigen Längenkorrektur von Seilzügen für Fensterhebermechanismen, und zwar solcher Art, welche die Nutzlänge einer Abdeckung erhöhen, um die Dehnung des Seilzugs auszugleichen, wobei dessen freie Länge konstant bleibt, **dadurch gekennzeichnet, dass** die Vorrichtung (10) aus einem Kolben (11), einem Ring (21), der den Kolben (11) umschließt, einer Druckfeder (25) und einem zylindrischen Element (26), das in seinem Innneren den Kolben (11), den Ring (21) und die Feder (25) beherbergt, besteht,
wobei das zylindrische Element (26) einen röhrenförmigen Körper mit einem ersten zylindrischen Teil (27) aufweist, das sich radial nach innen erstreckt und eine Auflagefläche (36) bildet,
wobei das eine Ende der Druckfeder (25), die zum Spannen des Seilzugs dient, auf dieser Auflagefläche (36) ruht und das gegenüberliegende Ende Druck auf den Ring (21) und den Kolben (11) ausübt,
wobei das erste zylindrische Teil (27) auf seiner seitlichen Innenfläche eine Längsanordnung (31) mit einer Verzahnung aufweist und seine Auflagefläche (36) mit schlitzförmigen Aussparungen (33) versehen ist,
wobei der Ring (21) eine Anordnung von Keilen (23) aufweist, die in radialer Lage platziert sind und längs in die Verzahnung der Längsanordnung (31) eingreifen, sodass der Kolben (11) nur in eine Richtung in das zylindrische Element (26), und zwar weg von der Auflägefläche (36), gleiten kann,
wobei der Kolben (11) einen röhrenförmigen Körper (15) aufweist, dessen eines Ende eine runde Lauf- oder Auflagefläche (19) besitzt, die sich zum anderen Ende hin in Form einer Schürze (12) erstreckt und mit Harpunen (14) versehen ist, die aus deren Umfang heraustreten, und ebenfalls zum anderen Ende hinzeigen, wobei die Spitzen (18) der Harpunen (14) zum Verankern in den schlitzförmigen Aussparungen (33) und zum Lösen aus den schlitzförmigen Aussparungen (33) durch einfaches Drehen des Kolbens (11) in Bezug auf das zylindrische Element (26) geeignet sind.

2. Vorrichtung zur selbsttätigen Längenkorrektur von Seilzügen für Fensterhebermechanismen nach Anspruch 1, **dadurch gekennzeichnet, dass** die schlitzförmigen Aussparungen (33) Enden (35-34) zum Ein- und Ausrasten der Harpunen (14) aufweisen.

3. Vorrichtung zur selbsttätigen Längenkorrektur von Seilzügen für Fensterhebermechanismen nach Anspruch 1, **dadurch gekennzeichnet, dass** beim Aufbewahren der Vorrichtung (10) oder wenn die Vorrichtung (10) nicht in der Trommelabdeckung des Fensterhebermechanismus platziert ist, die Harpunen (14) und ihre Spitzen (18), die aus der Schürze (12) heraustreten, in die schlitzförmigen Aussparungen (33) in der Auflagefläche (36) des zylindrischen Elements (26), insbesondere in die schlitzförmigen Aussparungen (35), hineinpassen, sodass der Kolben an dem zylindrischen Element (26) befestigt ist, wobei die Feder (25) zwischen dem Kolben (11) und dem zylindrischen Element (26) festgehalten wird, und sodass auf diese Weise auch auf die Feder (25) und den Ring (21) Druck ausgeübt wird.

4. Vorrichtung zur selbsttätigen Längenkorrektur von Seilzügen für Fensterhebermechanismen nach Anspruch 1, **dadurch gekennzeichnet, dass** beim Einsetzen der Vorrichtung (10) in die Trommelabdeckung des Fensterhebermechanismus durch den Bediener dieser den Kolben (11) in Bezug auf den Kolben (11) dreht und somit die Harpunen (14) zwingt, in die Aussparungen (33) einzutreten und von dem einen Rückhalteende (35) zum anderen Ende (34) zu passieren, um die verschiedenen Teile der Vorrichtung (10) freizugeben; gleichzeitig gleiten die Keile (23) auf Schrägflächen der Verzahnung (31) am zylindrischen Element (26), sodass diese Keile (23) sukzessive eingeklappt werden, bis sie ganz in die Verzahnung (31) eingreifen.

## Revendications

1. « Dispositif pour la correction automatique de la longueur du câble dans des mécanismes d'alimentation de vitres », du type conçu pour augmenter la longueur réelle d'un fourreau afin de compenser l'étirement du câble, en laissant sa longueur libre constante, **caractérisé en ce que** ledit dispositif (10) comprend un piston (11), un anneau (21) entourant ledit piston (11), un ressort à compression (25) et un élément cylindrique (26) qui héberge en son intérieur ledit piston (11), anneau (21) et ressort (25), où ledit élément cylindrique (26) a un corps tubulaire avec une première partie cylindrique (27), qui s'étend radialement vers l'intérieur formant une base (36),
où ledit ressort à compression (25), pour la tension du câble, a une extrémité reposant sur cette base (36), et à l'autre extrémité pousse l'anneau (21) et le piston (11),
où ladite partie cylindrique (27) a une disposition en longueur (31) de dents de pignons sur sa surface latérale intérieure, et sa base (36) a des rainures (33), où ledit anneau (21) a une disposition de cales (23) placées dans une position radiale, s'adaptant en longueur dans ces dents de pignons de la disposition en longueur (31) de sorte que ce piston (11) peut coulisser dans cet élément cylindrique (26) dans seulement une direction à partir de la base (36),
où ledit piston (11) a un corps tubulaire (15), dont une extrémité a une couronne ou base circulaire (19) qui s'étend vers l'autre extrémité comme une jupe (12), avec des harpons (14) sortant de son périmètre et pointant également vers l'autre extrémité, les extrémités (18) desdits harpons (14) étant adaptés pour se fixer dans lesdites rainures (33) et pour libérer lesdites rainures(33) en tournant simplement le piston (11) par rapport à l'élément cylindrique (26).

2. « Dispositif pour la correction automatique de la longueur du câble dans des mécanismes d'alimentation de vitres » conformément à la revendication 1 **caractérisé en ce que** lesdites rainures (33) ont des extrémités (35-34), pour pouvoir adapter et retirer les harpons (14) dans ces extrémités (35-34).

3. « Utilisation d'un dispositif pour la correction automatique de la longueur du câble dans des mécanismes d'alimentation de vitres » conformément à la revendication 1 **caractérisé en ce que** lorsque le dispositif (10) est stocké ou quand le dispositif (10) n'est pas placé dans le fourreau du tambour du mécanisme de levage de la vitre, les harpons (14) et leurs extrémités (18), qui sortent de la jupe (12), s'adaptent dans les rainures (33) situées dans la base (36), de l'élément cylindrique (26) et plus spécifiquement dans les rainures (35), laissant ainsi le piston fixé à l'élément cylindrique (26) saisissant fermement le ressort (25) entre le piston (11) et l'élément cylindrique (26), et poussant le ressort (25) et l'anneau (21).

4. « Utilisation d'un dispositif pour la correction automatique de la longueur du câble dans des mécanismes d'alimentation de vitres » conformément à la revendication 1 **caractérisé en ce que** quand l'opérateur place le dispositif (10) dans le fourreau du tambour du mécanisme de levage de la vitre, il tourne le piston (11) par rapport au piston (11), obligeant les harpons (14) à passer à travers la rainure (33), et à passer (14) d'une extrémité (35) de la retenue à l'autre extrémité (34) pour libérer les différentes parties de (10) ; simultanément, les cales (23) coulissent dans des rampes des dents de pignons (31 ) de l'élément cylindrique (26) pour faire que ces cales (23) se plient progressivement jusqu'à ce qu'elles entrent dans les dents de pignons (31).
